(19) **Europäisches Patentamt**

**European Patent Office**

**Office européen des brevets**

(11) **EP 0 975 136 A2**

(12) **EUROPÄISCHE PATENTANMELDUNG**

(43) Veröffentlichungstag:
26.01.2000 Patentblatt 2000/04

(51) Int. Cl.⁷: **H04M 15/30**, H04M 17/02

(21) Anmeldenummer: **99108125.8**

(22) Anmeldetag: **24.04.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.07.1998 DE 19833277**

(71) Anmelder: **Deutsche Telekom AG**
**53113 Bonn (DE)**

(72) Erfinder:
• **Brandt, Dagmar Dipl.-Ing.**
**06184 Zwintschöna (DE)**
• **Kunz, Bernd**
**76316 Malsch (DE)**

(54) **Eigentarifierung für öffentliche Telefone**

(57) Es wird ein flexibles Tarifierungssystem angegeben, das aus einer Eingabeschaltung (1) mit einer Tastatur besteht, die zur Eingabe der gewünschten Telefonnummer dient und mit einem Rufnummernspeicher (2) verbunden ist, in dem die gewählte Telefonnummer erfaßt wird, sowie einer dem Rufnummernspeicher (2) nachgeschalteten Vergleichaschaltung (3), die unter Anwendung der Kriterien den festgelegten Tarifzonen die gerade gewählte Rufnummer zuordnet. Durch eine mit dem Rufnummernspeicher (2) verbundene Wahlaussendungseinheit (8) erfolgt die eigentliche Wahl. Durch eine mit einer Tarifierungseinheit (4) verbundene Schaltung zur Gesprächsbeginn-Erkennung (6) wird der Gesprächsbeginn erkannt. Eine Schaltung zur Zeitmessung (5) aktiviert die interne Erzeugung von Tarifimpulsen entsprechend der gespeicherten Tarifzone in der Tarifierungseinheit (4). Die Tarifierungseinheit (4) ist mit einer Kassier-/Abbuchungseinheit (7) verbunden, die die von der Tarifierungseinheit (4) kommenden Impulse umsetzt und den entsprechenden Verbindungspreis vom Kunden kassiert und/oder bucht.

FIG. 1

EP 0 975 136 A2

**Beschreibung**

Die Erfindung betrifft ein Verfahren und eine Schaltungsanordnung zur Eigentarifierung für öffentliche Telefone nach dein Oberbegriff des Patentanspruchs 1.

Für die Kassierung bzw. Abbuchung an Münz- und Kartentelefonen wird im allgemeinen der Tarifeinheitenimpuls aus dem Telefonnetz (16 kHz-Impuls) bei analogen Anschlüssen bzw. die Tarifinformation AOC bei ISDN-Anschlüssen verwendet.

Stehen die genannten Tarifinformationen nicht zur Verfügung, kann keine Kassierung bzw. Abbuchung erfolgen.

Auf dem Markt befindliche öffentliche Telefone an analogen Anschlußleitungen erkennen erst mit Eintreffen des zweiten Tarifeinheitenimpulses aus dem Netz die Taktzeit der gewählten Verbindung. Hat der Kunde nur das Minimum für eine Tarifeinheit eingeworfen bzw. auf der Karte zur Verfügung und kommt er einer möglichen Nachzahlaufforderung nicht nach, kommt es zur Trennung der Verbindung mit dem zweiten Tarifeinheitenimpuls, da aus Unkenntnis des Zeitpunktes des zweiten Tarifeinheitenimpulses nicht rechtzeitig vorher vom öffentlichen Telefon getrennt werden kann. Für den Betreiber des öffentlichen Telefons sind damit zwei Tarifeinheiten angefallen, von denen der Kunde nur eine bezahlt hat.

Zur Eigentarifierung ist aus der DE 298 00 362 U1 bereits ein Gebührenimpulsgeber für Telekommunikationsgeräte bekannt, der eine Eigentarifierung speziell für Verbindungen zu anderen Netzbetreibern durchführen kann. Es wird zwischen Telefonnetz und Telekommunikationsgerät der Gebührenimpulsgeber mit einer aktualisierbaren Datenbank für alle Netzbetreiber geführt, die bei Gesprächen mit Tarifinformation diese zum Telefon durchreicht und bei Verbindung ohne Tarifinformation selbst Gebührenimpulse anhand der Auswertung der gewählten Telefonnummer mit Vorwahl erzeugt.

Außerdem ist durch die DE 42 41 762 A1 ein Verfahren zur Anzeige von Verbindungsgebühren bei einer Teilnehmereinrichtung bekannt. Dabei ist in einem Speicher für jede Teilnehmerrufnummer ein Gebührencode erfaßt, der bei Anruf der entsprechenden Telefonnummer für eine Anzeige der Gebühren dient.

Weiterhin ist aus der DE 43 09 291 A1 ein Münztelefon mit einem Gebührenzähler bekannt. Dabei bestimmt ein Gebührenrechner mit Zeituhr die Gebühren für ein Gespräch selbst, um eine Gebührenerfassung unabhängig von einem Amtssignal und auch bei Nebenstellen zu ermöglichen. Der Gebührenrechner umfaßt einen Gebührenspeicher und außerdem wertet er die unterschiedlichen Signale unterschiedlicher Signalerzeugungseinrichtungen aus, um ein entsprechendes Anzeigesignal und ein entsprechendes Betriebssignal zur Freigabe der Telefonverbindung zu erzeugen.

Der Nachteil der vorgenannten bekannten Lösungen besteht darin, daß bei Verwendung eines Gebührenrechners oder Speichers mit Gebührencode die erstmalige Eingabe und Pflege der Gebührendaten, zum Beispiel alle Vorwahlen mit den entsprechenden Tarifzonen, sehr aufwendig ist. Die Unterscheidung der Gespräche nur nach Orts-, Fern- oder Auslandsgesprächen ist zwar einfach, aber sehr grob. Sie führt bei öffentlichen Telefonen zu teilweise großen Abweichungen zur echten Tarifierung im Telefonnetz.

Der Erfindung liegt deshalb die Aufgabe zugrunde, ein Verfahren und eine Schaltungsanordnung zu schaffen, die eine einfache, aber genauer unterteilte und damit gerechtere Eigentarifierung ermöglichen, die nicht bei jeder Tarifänderung im Netz geändert werden muß und die außerdem Verbindungen zu fremden Netzbetreibern auf einfache Art und Weise tarifierbar macht.

Die erfindungsgemäße Lösung der Aufgabe für das Verfahren ist im Kennzeichen des Patentanspruchs 1 charakterisiert.

Weitere Lösungen bzw. Ausgestaltungen für das Verfahren sind in den Kennzeichen der Patentansprüche 2 bis 4 charakterisiert.

Die Lösung der Aufgabe für die Schaltung zur Durchführung des Verfahrens ist im Kennzeichen des Patentanspruchs 5 charakterisiert.

Weitere Lösungen bzw. Ausgestaltungen der Schaltung sind in den Kennzeichen der Patentansprüche 6 bis 8 charakterisiert.

Dadurch, daß nunmehr im öffentlichen Telefon eine Eigentarifmatrix gespeichert ist, die die Einteilung der gewählten Telefonnummern und die zuzuordnenden Tariftaktzeiten enthält, wird eine sehr genau unterteilte und damit gerechtere Eigentarifierung erreicht, die nicht bei jeder Tarifänderung im Netz geändert werden muß. Außerdem sind dadurch Verbindungen zu fremden Netzbetreibern auf einfache Art und Weise tarifierbar. Bei der Wahl einer Telefonnummer vergleicht nun die Steuerung des öffentlichen Telefons diese mit der Eigentarifmatrix und legt die Taktzeit, das heißt die Zeit, nach der jeweils der Preis für eine Taktzeit kassiert bzw. abgebucht wird, für die Verbindung fest. Weitere Ausgestaltungen des Verfahrens zur Eigentarifierung bzw. der Schaltung sind folgende:

- Wenn dem öffentlichen Telefon Wochentag, Uhrzeit und Feiertag oder auch nur einzelne dieser Komponenten bekannt sind, können für spezielle Wochentage und Tageszeiten sowie Feiertage abweichende Tarife eingestellt werden, zum Beispiel beim Wochenendtarif wird die Taktzeit länger als an den übrigen Wochentagen.

- Um Ungerechtigkeiten bei bestimmten Ortsnetzen, zum Beispiel Orte mit zweistelligen Ortskennzahlen, auszugleichen, können Spezialfälle vereinbart und eingestellt werden.

Außerdem können weitere Verfeinerungen der Eigentarifmatrix vorgenommen werden, die in der nachfolgenden Beschreibung detailliert angegeben werden.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:

Fig. 1 ein prinzipielles Flußdiagramm für die Verfahrensschritte und

Fig. 2 ein Prinzipschaltbild für die Schaltung zur Durchführung des Verfahrens.

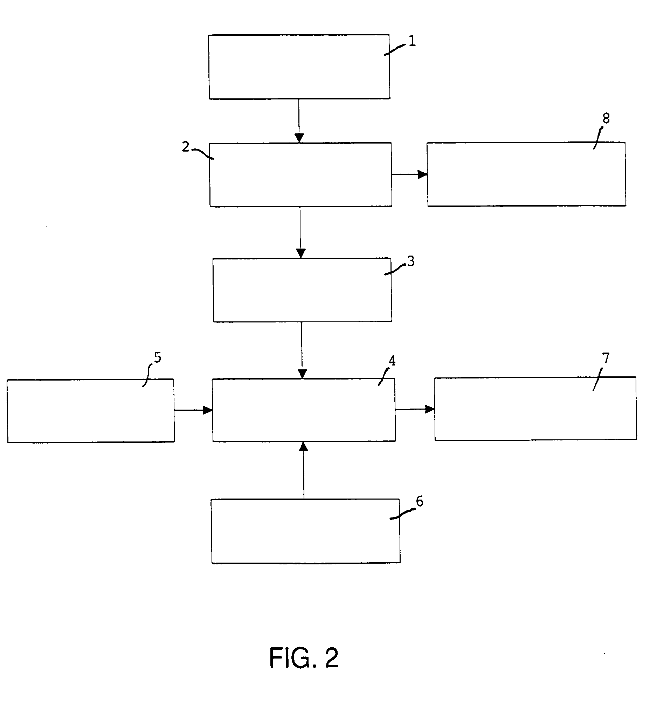

Bevor die detaillierte Funktionsweise und Wirkungsweise des erfindungsgemäßen Verfahrens und der erfindungsgemäßen Schaltung nach Fig. 2 erklärt wird, soll zunächst eine Beschreibung der grundsätzlichen Voraussetzungen und der grundsätzlichen Wirkungsweise folgen.

Zur Eigentarifierung wird in einem öffentlichen Telefon eine Eigentarifmatrix eingeführt und gespeichert, die die Einteilung der gewählten Telefonnummern und die zugeordneten Tariftaktzeiten enthält.

Für die Funktionsweise wird vorausgesetzt, daß das öffentliche Telefon die Ortskennzahl ONKZ des Ortes kennt, in dem es angeschaltet ist. Bei den am Markt befindlichen Münz- und Kartentelefonen ist dem Gerät entweder die Ortskennzahl ONKZ selbst oder die Fernmeldekontonummer bekannt, aus der die Ortskennzahl ableitbar ist, da die zwölfstellige Fernmeldekontonummer aus Ortskennzahl (linksbündig) und Teilnehmerrufnummer (rechtsbündig) besteht, die in der Mitte mit Nullen aufgefüllt wurde.

Die Ortskennzahl ist Bestandteil der Vorwahl des Ortes, in dem man anrufen möchte, und zwar die Vorwahl, reduziert um die führende Null. Für jede Verbindung außer bei Ortsgesprächen ist die Wahl dieser Vorwahl eine zwingende Voraussetzung.

Zu berücksichtigen ist, daß die Ortskennzahlen unterschiedlich lang sind, zum Beispiel 2- bis 5-stellig.

Ausgewertet wird nun die gewählte Telefonnummer und zwar nach folgenden Kriterien:

| Telefonnummer beginnt mit | Tarifzone | Kriterium | Taktzeit in ms |
|---|---|---|---|
| 1 ... 9 | Ort | | |
| 0ab(cde) | Ort | wenn ab(cde) = eigene ONKZ | |
| 0ab(cde) | Nah I | wenn ab = ab der eigenen ONKZ | |
| 0ab(cde) | Nah II | wenn a = a der eigenen ONKZ | |
| 0ab(cde) | Fern | wenn ab ≠ ab der eigenen ONKZ | |
| 003,004,0090 | Europa | | |
| 001, 002, 005-8, 0091-9 | Welt | | |
| 010 | fremder Netzbetreiber | | |
| 110, 112 | Notruf | | 0 |
| 0800 | freecall | | |

Bei Wahl einer Telefonnummer vergleicht die Steuerung des öffentlichen Telefons diese mit der Eigentarifmatrix und legt die Taktzeit, das heißt die Zeit, nach der jeweils der Preis für eine Taktzeit kassiert bzw. abgebucht wird, für die Verbindung fest.

Weitere Ausgestaltungen des erfindungsgemäßen Verfahrens bzw. der Schaltung sind folgende:

- Wenn dem öffentlichen Telefon Wochentag, Uhrzeit und Feiertage oder auch nur eine einzelne dieser Komponenten bekannt sind, können für spezielle Wochentage und Tageszeiten sowie für Feiertage abweichende Tarife eingestellt werden. So zum Beispiel beim Wochenendtarif ist die Taktzeit länger als an den übrigen Wochentagen.

- Um Ungerechtigkeiten bei bestimmten Ortsnetzen, zum Beispiel Orte mit zweistelligen Ortskennzahlen, auszugleichen, können Spezialfälle vereinbart werden und in der Schaltung entsprechend abgespeichert werden.

| ONKZ | „ab" für Nah I |
|---|---|
| 30 (Ortsnetz Berlin) | 33 |
| 40 (Ortsnetz Hamburg) | 41 |
| 69 (Ortsnetz Frankfurt/M.) | 61 |
| 89 (Ortsnetz München) | 81, 80 |

Bei den oben genannten Ortsnetzen würde sonst keine Nah I-Verbindung möglich sein, da es keine weiteren Ortsnetze mit gleichen "ab" gibt.

- Weitere Modifikationen und Verfeinerungen der Eigentarifmatrix sind möglich durch:

    - die Aufnahme der Auskunftdienste, beginnend mit 118, die sonst als Ortsgespräche tarifiert würden;
    - die Aufnahme der Sonderdienste, beginnend mit 011-9, die sonst als Ferngepräche tarifiert würden;
    - die Aufnahme neuer Dienste, beginnend mit 0700 und 0900, die sonst als Nah II- oder Ferngespräche tarifiert würden und
    - eine feinere Unterscheidung der Zonen Europa und Welt.

- Da dem öffentlichen Telefon die Taktzeiten bekannt sind, kann eine Nachzahlaufforderung bei ungenügendem Guthaben rechtzeitig geschaltet werden und beim Nichtnachkommen auf diese Nachzahlforderung getrennt werden.

- Es können Verbindungen zu entgeltfreien Diensten des Netzen tarifiert werden, zum Beispiel die mit 0130 bzw. 0800 beginnenden sogenannten freecall-Nummern.

- Entgeltpflichtige Verbindungen können durch Angabe der Taktzeit 0 ms entgeltfrei geschaltet werden.

- Wegen nicht aufkommenden Tarifeinheitenimpulsen an öffentlichen Telefonen eigentlich gesperrte Verbindungen, wie zum Beispiel Fernamt, können tarifiert werden.

- Für die Nutzung fremder Netzbetreiber kann als Sonderfall auch vereinbart werden, daß die Verbindung wie im eigenen Netz geführte Verbindungen tarifiert werden sollen (ausblenden der Netzbetreiberauswahl 010xy). Ebenfalls ist es möglich, für jeden Netzbetreiber eine eigene Tarifierung festzulegen.

- Die Eigentarifmatrix muß im öffentlichen Telefon nicht festgespeichert sein, sondern kann am Gerät von Hand geändert werden oder als Software von einem Hintergrundsystem geladen werden.

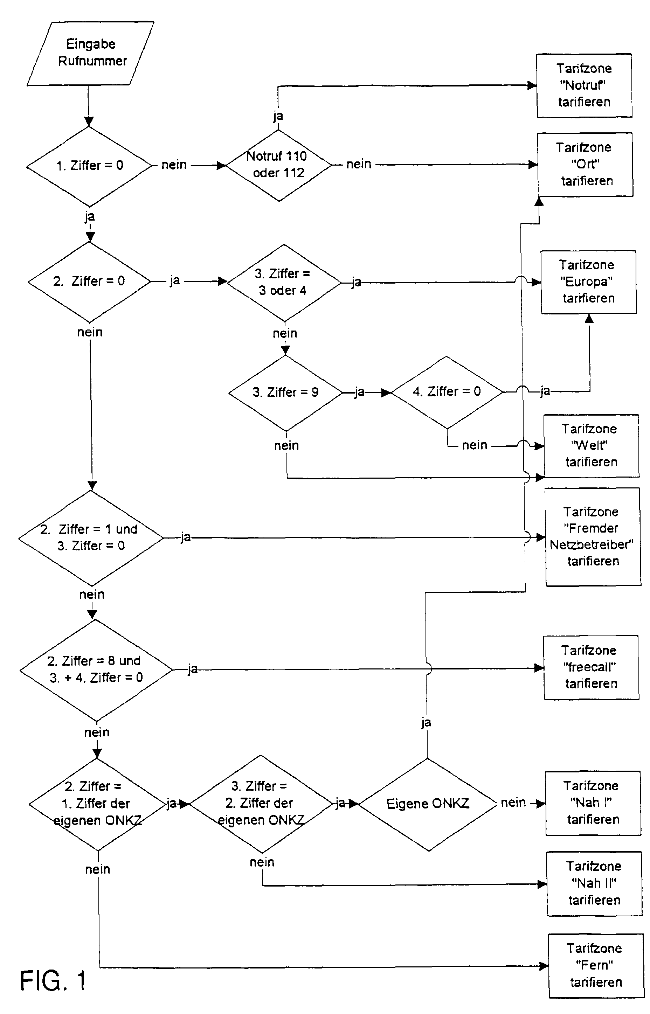

Das in Fig. 1 dargestellte Flußdiagramm zeigt grundsätzlich die Verfahrensschritte, die nach Eingabe einer Rufnummer zum Selbsttarifieren eines öffentlichen Telefons erforderlich sind. Dabei wird nach Eingabe der Rufnummer diese erfaßt und durch Vergleich und unter Anwendung der Kriterien den festgelegten Tarifzonen zugeordnet, wie deutlich aus dem Flußdiagramm nach Fig. 1 zu erkennen ist, weshalb eine weitere Erklärung dieses Flußdiagramms nicht erforderlich ist.

In Fig. 2 ist ein prinzipielles Schaltungsdiagramm gezeigt, das zur Eigentarifierung eines öffentlichen Telefons dient und dort als Schaltungsanordnung ein Teil des Telefonapparates ist.

Die Schaltungsanordnung zur Eigentarifierung nach Fig. 2 besteht zunächst aus der Eingabeschaltung 1 über die mit Hilfe einer Tastatur der Kunde die gewünschte Telefonnummer eingibt. Die Eingabeschaltung 1 ist mit einem Rufnummernspeicher 2 verbunden, so daß die gewünschte gewählte Telefonnummer von der Eingabeschaltung in den Rufnummernspeicher 2 gegeben wird und dort erfaßt wird. In einer nachgeschalteten Vergleichsschaltung 3 wird die gewählte und eingespeicherte Telefonnummer unter Anwendung der Kriterien den festgelegten Tarifzonen wie in Fig. 1 gezeigt, zugeordnet und durch eine Wahlaussendungseinheit 8, die mit dem Rufnummernspeicher 2 in Verbindung steht, gewählt.

Wird der Gesprächsbeginn von einer einen Teil der Eigentarifierungsschaltung bildenden Schaltung zur Gesprächsbeginn-Erkennung 6 erkannt, wird mittels Zeitmessung, das heißt der für die Zeitmessung vorgesehenen Schaltung 5, die interne Erzeugung von Tarifimpulsen entsprechend der Tarifzone in einer Tarifierungseinheit 4 aktiviert. Mit der Tarifierungseinheit 4 ist eine Kassier-/Abbucheinheit 7 verbunden, die die von der Tarifierungseinheit 4 kommenden Impulse umsetzt und den Verbindungspreis beim Kunden entweder kassiert oder bucht.

**Liste der Bezugszeichen**

1     Eingabeschaltung
2     Rufnummernspeicher
3     Vergleichsschaltung
4     Tarifierungseinheit
5     Zeitmessung
6     Schaltung für die Gesprächsbeginn-Erkennung
7     Kassier-/Abbucheinheit
8     Wahlaussendungseinheit

**Patentansprüche**

1.  Verfahren zur Eigentarifierung für öffentliche Telefone für über Eingabemittel, wie zum Beispiel eine Tastatur oder einen Kartenleser einer von einem Teilnehmer bzw. Kunden eingegebene gewünschte Telefonnummer, dadurch gekennzeichnet,

    daß die eingegebene Rufnummer zunächst in einem Rufnummernspeicher (2) gespeichert wird, danach unter Anwendung einer gespeicherten Eigentarifmatrix und der darin festgehaltenen Kriterien den festgelegten Tarifzonen zugeordnet wird und über eine Wahlaussendungseinheit (8) den Wählbeginn auslöst,

    daß nach Erkennen des Gesprächsbeginns mittels Zeitmessung die interne Erzeugung von Tarifimpulsen entsprechend der Tarifzone in einer Tarifierungseinheit (4) aktiviert wird und

    daß daraufhin von der Tarifierungseinheit (4) abgegebene Impulse zum Kassieren bzw. Abbuchen entsprechend umgesetzt werden.

2.  Verfahren nach dem Oberbegriff des Patentanspruches 1, dadurch gekennzeichnet,

    daß die Eigentarifmatrix die Einteilung der gewählten Telefonnummern und die zuzuordnenden Tariftaktzeiten enthält,

    daß die gewählte Telefonnummer nach bestimmten Kriterien, dem Typ der Telefonnummer ausgewertet wird und daraus mit Hilfe einer im öffentlichen Telefon gespeicherten Eigentarifmatrix die Taktzeit festgelegt wird.

3.  Verfahren nach einem der Patentansprüche 1 oder 2, dadurch gekennzeichnet,

    daß speziellen Wochentagen und Tageszeiten sowie Feiertagen abweichende Tarife zugeordnet werden, in dem die Taktzeit länger als an den übrigen Wochentagen ist.

4.  Verfahren nach einem der Patentansprüche 1 bis 3, dadurch gekennzeichnet,

    daß die Erkennung ob und welche Ortsnetzkennzahl (ONKZ) vorliegt und welche Tarifzone zu tarifieren ist, programmgesteuert erfolgt.

5.  Schaltungsanordnung zur Durchführung des Verfahrens nach einem der Patentansprüche 1 bis 4, dadurch gekennzeichnet,

daß eine Eingabeschaltung (1) mit einer Tastatur, die zur Eingabe der gewünschten Telefonnummer dient, mit einem Rufnummernspeicher (2) verbunden ist, in dem die gewählte Telefonnummer erfaßt wird,

daß dem Rufnummernspeicher (2) eine Vergleichsschaltung (3) nachgeschaltet ist, die unter Anwendung der Kriterien den festgelegten Tarifzonen die gerade gewählte Rufnummer zuordnet,

daß durch eine mit dem Rufnummernspeicher (2) verbundene Wahlaussendungseinheit (8) die eigentliche Wahl erfolgt,

daß durch eine mit einer Tarifierungseinheit (4) verbundene Schaltung zur Gesprächsbeginn-Erkennung (6) der Gesprächsbeginn erkannt wird,

daß mittels einer Schaltung zur Zeitmessung (5) die interne Erzeugung von Tarifimpulsen entsprechend der gespeicherten Tarifzone in der Tarifierungseinheit (4) aktiviert wird und

daß die Tarifierungseinheit (4) mit einer Kassier-/Abbuchungseinheit (7) verbunden ist, die die von der Tarifierungseinheit (4) kommenden Impulse umsetzt und den entsprechenden Verbindungspreis vom Kunden kassiert und/oder bucht.

6.  Schaltungsanordnung nach Patentanspruch 5, dadurch gekennzeichnet,

daß die Eigentarifmatrix im öffentlichen Telefon gespeichert ist, und über die Tastatur mittels Hand veränderbar ausgebildet ist.

7.  Schaltungsanordnung nach Patentanspruch 5, dadurch gekennzeichnet,

daß die Eigentarifmatrix als Software von einem Hintergrundsystem durch Download in die einen Teil des öffentlichen Telefons bildende Eigentarifierungsschaltung ladbar ist.

8.  Schaltungsanordnung nach einem der Patentansprüche 5 bis 7, dadurch gekennzeichnet,

daß die Eigentarifmatrix auch zur Nutzung fremder Netzbetreiber ausgebildet ist.

FIG. 1

FIG. 2